**Europäisches Patentamt**

**European Patent Office**

**Office européen des brevets**

(19)

(11) Veröffentlichungsnummer : **0 513 417 B1**

(12) **EUROPÄISCHE PATENTSCHRIFT**

(45) Veröffentlichungstag der Patentschrift :
**25.01.95 Patentblatt 95/04**

(51) Int. Cl.$^6$ : **G05B 19/4103**

(21) Anmeldenummer : **91107984.6**

(22) Anmeldetag : **16.05.91**

(54) **Numerische Steuerung für Werkzeugmaschinen oder Roboter.**

(43) Veröffentlichungstag der Anmeldung :
**19.11.92 Patentblatt 92/47**

(45) Bekanntmachung des Hinweises auf die
Patenterteilung :
**25.01.95 Patentblatt 95/04**

(84) Benannte Vertragsstaaten :
**CH DE FR GB IT LI**

(56) Entgegenhaltungen :
**EP-A- 0 417 337**
**DE-A- 2 845 953**
**DE-A- 3 644 952**
**ZWF ZEITSCHRIFT FUR WIRTSCHAFTLICHE
FERTIGUNG. Bd. 85, Nr. 8, August 1990,MUN-
CHEN DE Seiten 421 - 426; DR.-ING. A. POT-
THAST U.A.: 'Spline-Interpolation für
fünfachsige Fräsbearbeitung'**

(56) Entgegenhaltungen :
**ZWF ZEITSCHRIFT FUR WIRTSCHAFTLICHE
FERTIGUNG. Bd. 84, Nr. 3, März 1989,MUN-
CHEN DE Seiten 114 - 117; DR.-ING. H. DIST-
LER: 'Spline-Programmierung als Lösung für
komplexe Bearbeitungsaufgaben'
WERKSTATTSTECHNIK, ZEITSCHRIFT FUR
INDUSTRIELLE FERTIGUNG. Bd. 76, Nr.
5,Mai1986, BERLIN DE Seiten 309 - 312;
J.HUAN: 'Spline-Interpolation in der Steuerung einer Werkzeugmaschine.'**

(73) Patentinhaber : **SIEMENS
AKTIENGESELLSCHAFT
Wittelsbacherplatz 2
D-80333 München (DE)**

(72) Erfinder : **Wetzel, Friedrich, Dipl.-Ing. (FH)
Adelsgasse 31
W-8551 Heroldsbach (DE)**
Erfinder : **Kubitz, Dietmar, Dipl.-Ing. (FH)
Schwalmstrasse 3
W-4044 Kaarst 1 (DE)**

## Beschreibung

Die Erfindung bezieht auf eine numerische Steuerung für Werkzeugmaschinen oder Roboter, bei der mit Hilfe eines in einem Interpolationstakt getakteten Interpolators zwischen vorgegebenen Wegpunkten einer Bewegungsbahn liegende Orte ermittelt werden, entsprechend denen Soll-Werte für die jeweiligen Achspositionen bestimmt werden und wobei für jede lagegeregelte Achse in einem Lageregertakt, dessen Frequenz größer als der Interpolationstakt ist, in einem jeweils zugeordneten Lageregelkreis die jeweilige Ist-Achsposition mit der jeweiligen Soll-Achsposition verglichen wird, wobei aus der Abweichung dieser Positionen zueinander über einen Regler die jeweilige Achse lagegeregelt wird und wobei Mittel zum Speichern von Korrekturwerten für die Bewegungsbahn vorgesehen sind.

Bei derartigen handelsüblichen numerischen Steuerung kann beispielsweise eine Anzahl von Korrekturwerten in Form einer Tabelle vorgesehen sein, die vom Programm der numerischen Steuerung abgearbeitet wird. Um dabei nicht ständig Eingriffe in den Programmablauf vornehmen zu müssen, ist es dabei sinnvoll, die Anzahl der Korrekturwerte möglichst gering zu halten. Dies führt dazu, daß die erreichbare Genauigkeit der Korrektur begrenzt ist.

Es wäre aber auch denkbar, daß der Korrekturvorgang nicht das Programm variiert, sondern in den Lageregelkreis der jeweils zu korrigierenden Achsen verlagert wird und dort im Lageregertakt vorgenommen wird. Der Lageregelkreis ist jedoch ein hochdynamisches System, in das schnelle Eingriffe nicht vorgenommen werden sollten, um den regelungstechnischen Betriebsablauf nicht zu gefährden.

Aufgabe der Erfindung es ist, eine numerische Steuerung der eingangs genannten Art so auszubilden, daß eine Feinkorrektur der Achsen hinsichtlich Prozeßparametern wie Temperatur, Gewicht, Spindelsteigungsfehler oder ähnlichem ermöglicht wird, ohne daß dazu der Programmlauf der Steuerung gestört wird und ohne daß störende Eingriffe in den Lageregelkreis der jeweils zu korrigierenden Achse vorzunehmen sind.

Gemäß der Erfindung wird diese Aufgabe dadurch gelöst, daß die Korrekturwerte jeder Achse jeweils als mindestens eine Fehlerkurve in einem Korrekturwertgeber gespeichert sind, daß im Interpolationstakt für jede aktuelle Ist-Achsposition die aktuellen Korrekturwerte für die Achsen den Fehlerkurven entnommen werden und daß der resultierende jeweilige Korrekturwert jeder Achse jeweils additiv die im zugehörigen Lageregelkreis zu berücksichtigende jeweilige Ist-Achsposition korrigiert.

Eine erste vorteilhafte Ausbildung der Erfindung ist dadurch gekennzeichnet, daß die jeweilige Fehlerkurve durch eine Folge von signifikanten Werten vorgeben ist, deren Zwischenwerte durch eine lineare Interpolation bestimmbar sind. Im Korrekturwertgeber müssen dadurch nur einige wenige signifikante Werte gespeichert werden und durch einen Rechenvorgang wird aus diesen Punkten, die sozusagen Knickpunkte zwischen linearen Wegabschnitten darstellen, die Ermittlung von Zwischenwerten zwischen diesen Punkten nach dem Prinzip der linearen Interpolation ermöglicht. Die jeweiligen linearen Wegabschnitte der Fehlerkurve können dabei beispielsweise in cartesischer Normalform angegeben sein.

Eine weitere vorteilhafte Ausbildung der Erfindung ist dadurch gekennzeichnet, daß Mittel zum Verzerren der Fehlerkurve entsprechend vorgegebenen Prozeßparametern vorgesehen sind. So kann beispielsweise entsprechend der Umgebungstemperatur eine Modifikation der jeweiligen Fehlerkurve entsprechend den Temperaturgesetzen vorgenommen werden. Für den Fall, daß jeweils nur einige signifikante Werte sozusagen als Knickpunkte die jeweilige Fehlerkurve angeben, ist es aber auch möglich, zu ausgewählten Prozeßparametern die jeweils zugehörigen signifikanten Werte abzuspeichern, sofern es nicht sogar möglich ist, einen mathematischen Zusammenhang zwischen den Prozeßparametern und den signifiganten Werten für deren Variation in das System einfließen zu lassen.

Eine weitere vorteilhafte Ausbildung in der Erfindung ist dadurch gekennzeichnet, daß jeweils ein Filter zum Begrenzen der Korrekturwertänderungsgeschwindigkeit vorgesehen ist. Damit wird der Lageregelkreis vor sprunghaften Änderungen seiner Regelabweichung durch die Beaufschlagung mit dem Korrektwertsignal geschützt, wie diese insbesondere dann auftreten können, wenn die Fehlerkurve durch lineare Abschnitte realisiert wird, deren Steigungen gegeneinander relativ stark voneinander abweichen. Das Filter bewirkt damit sozusagen ein Verschleifen der Fehlerkurve, wodurch sichergestellt ist, daß Störungen im Lageregelkreis vermieden werden.

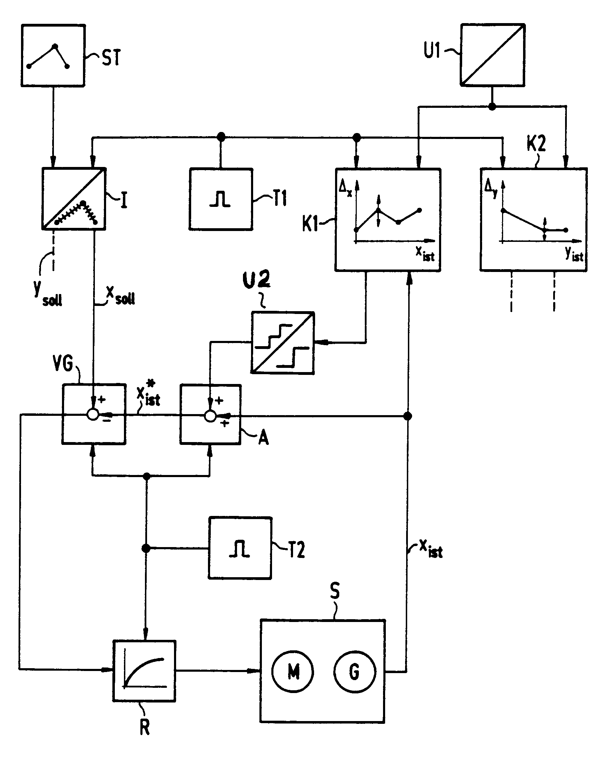

Ein Ausführungsbeispiel der Erfindung ist in der Zeichnung dargestellt und wird im folgenden näher erläutet.

In Form eines Blockschaltbildes ist dabei gezeigt, wie eine Steuerung ST einzelne durch starke Punkte angedeutete signifikante Knickpunkte einer zweidimensionalen Bewegungsbahn für einen Bewegungsvorgang vorgibt, an dem zwei Achsen x und y beteiligt sein mögen. Die Steuerung ST ist mit einem Interpolator I verbunden. Gesteuert vom Takt eines Taktgebers T1 gibt der Interpolator I Zwischenpunkten entsprechende achsspezifische Sollwerte an seinem Ausgang ab.

Im Ausführungsbeispiel wird dabei von absoluten Positionen ausgegangen. Selbstverständlich ist auch die eine inkrementelle Sollwertvorgabe möglich. Auch ist eine zusätzliche Feininterpolation vorsehbar, auf die im Ausführungsbeispiel der Übersichtlichkeit halber ebenfalls verzichtet worden ist. Aus diesem Grund wird auch auf die weitere Verarbeitung der Soll-Positionen für eine y-Achse, d.h. auf die Verarbeitung von Werten $y_{soll}$, nicht weiter eingegangen. Die Erfindung wird vielmehr einzig und allein in Bezug auf die x-Achse erläutert.

Der Wert $x_{soll}$ gelangt an einen Vergleicher VG, der den Wert $x_{soll}$ mit einem korrigierten Ist-Wert $x_{ist}$, auf dessen Generierung im folgenden noch eingegangen wird, im Takt eines Taktgebers T2, der dem Lageregelkreis zugeordnet ist, vergleicht. Entsprechend dem Vergleichsergebnis wird ein Regler R angesteuert, dessen Arbeitsweise ebenfalls durch den Taktgeber T2 bestimmt sein kann. Am Ausgang des Reglers liegt ein Ausgangssignal für einen Motor M vor, der die Positionierung der x-Achse vornimmt. Unterlagerte weitere Regelschleifen sind selbstverständlich vorsehbar. Zur Erfassung der Achs-Istposition $x_{ist}$ dient ein Geber G, der mit dem Motor M gekuppelt ist. Das Ausgangssignal $x_{ist}$ wird über einen Addierer A, der die besagte Korrekturfunktion vornimmt, an den Vergleicher VG zurückgekoppelt. Die funktionelle Einheit von Motor M und Geber G ist in der Darstellung als Symbol Strecke S angedeutet. Der Lageregelkreis für den Motor M muß für einen dynamischen Prozeß, wie dieser bei der Steuerung moderner Werkzeugmaschinen vorliegt, ausgelegt sein. Demzufolge weist der Taktgeber T2 eine relativ hohe Taktfrequenz aus, die somit ein Vielfaches der Taktfrequenz des Taktgebers T1 betragen kann.

Technische Prozesse verlaufen in der Realität nie ganz ungestört. So ist auf Grund von Gewichtseinflüssen, Temperatureinflüssen, Spindelsteigungsfehlern u.ä. eine Korrektur der jeweils erfaßten Ist-Achsposition $x_{ist}$ wünschenswert, um eine Optimierung des Bewegungsvorgangs hinsichtlich der Lagegenauigkeit sicherzustellen. Zu diesem Zweck sind Korrekturwertgeber K1 und K2 vorgesehen, die jeweils einer der Achse zugeordnet sind. So ist der Korrekturwertgeber K1 der x-Achse und der Korrekturwertgeber K2 der y-Achse zugeordnet. Im Korrekturwertgeber K1 bzw. K2 sind jeweils die der jeweiligen Achse x bzw. y zugeordneten Fehlerkurven vorgesehen, die den Verlauf von Korrekturwerten $delta_x$ bzw. $delta_y$ zu den Achs-Istwerten $x_{ist}$ bzw. $y_{ist}$ aufzeigen.

Diese Fehlerkurven könnten zwar prinzipiell durch eine Vielzahl von unmittelbar benachbarten Werten gespeichert sein, jedoch erweist es sich als technisch ausgesprochen einfach, wenn der Verlauf der Fehlerkurven jeweils nur durch einige signifikante Punkte (in der Darstellung jeweils durch dicke Punkte angedeutet) vorgegeben wird, zwischen denen lineare Wegabschnitte angenommen sind, die sich mathematisch beispielsweise in cartesischer Normalform beschreiben lassen. Für jeden Wert $x_{ist}$ für die Ist-Achsposition kann damit dem Korrekturwertgeber K1 entsprechend der aus linearen Wegabschnitten realisierten Fehlerkurve der jeweilige Korrekturwert $delta_x$ entnommen werden und über einen Umsetzer U2 dem Addierer A mitgeteilt werden. Dort wird somit der korrigierte Wert der Ist-Achspositon $x_{ist}^*$ gebildet. Diese Korrektur der Achs-Istposition $x_{ist}$ erfolgt nun allerdings nicht im Takt des Taktgebers T2, sondern im wesentlich langsameren Takt des Taktgebers T1. Dadurch wird der Lageregelkreis in seiner Funktion mit Sicherheit nicht störend beeinträchtigt.

Zur Funktion des Umsetzers U2 sei folgendes bemerkt. Der Umsetzer U2 ist dann von Bedeutung, wenn beispielsweise eine aus geraden Abschnitten resultierende Fehlerkurve sehr sprunghaft verläuft. Der Umsetzer U2 ist dann nach Art eines Filters so ausgelegt, daß starke Sprunge des Ausgangssignals des Korrekturwertgebers K1 im Takt des Taktgebers T1 nur stufenweise und somit verzögert an den Addierer A durchgeschaltet werden. Damit ist eine Glättung der Fehlerkurve gewährleistet.

Auf die Funktion des Korrekturwertgebers K2 für die y-Achse wird der Übersichtlichkeit halber nicht weiter eingegangen.

Es liegen hier prinzipiell gleiche Verhältnisse vor wie bei der x-Achse.

Die Korrekturwertgeber K1 bzw. K2 können in Abhängigkeit von Prozeßparametern so gestaltet sein, daß entsprechend dem Ausgangssignal eines vom jeweiligen Parameter beaufschlagten Umsetzers U1 die signifikanten Werte der Fehlerkurve variiert werden können. Dies ist in der Darstellung für den Korrekturwertgeber K1 bzw. K2 jeweils durch Doppelpfeile für einen der signifikanten Werte angedeutet. So kann beispielsweise dann, wenn vom Umsetzer U1 eine bestimmte Umgebungstemperatur erfaßt wird, eine dieser Temperatur entsprechende Variation aller signifikanten Werte vorgenommen werden. Durch ein solches Einbinden von Prozeßparametern kann darauf verzichtet werden, eine Vielzahl von prozeßspezifischen Fehlerkurven in den Korrekturwertgebern K1 bzw. K2 vorzuhalten.

Beim Ausführungsbeispiel ist für die Korrekturwertgeber K1 und K2 angenommen, daß jeder Ist-Achsposition $x_{ist}$ bzw. $y_{ist}$ nur ein Korrekturwert zuzuordnen ist , der als $delta_x$ bzw. $delta_y$ nur auf dieselbe Achse einwirkt. Selbstverständlich ist es auch möglich, daß verkoppelte Verhältnisse vorliegen, daß also einer Ist-Achsposition $x_{ist}$ auch noch ein Korrekturwert $delta_y$ zuzuordnen wäre und einer Ist-Achsposition $y_{ist}$ ein Korrekturwert $delta_x$ zuzuordnen wäre. Beide Werte $delta_x$ wären additiv zu verarbeiten. Gleiches gilt für die Werte $delta_y$. Dieser Sachverhalt der Achsverkopplung ist der Übersichtlichkeit halber allerdings nicht dargestellt.

**Patentansprüche**

1. Numerische Steuerung für Werkzeugmaschinen oder Roboter, bei der mit Hilfe eines in einem Interpolationstakt getakteten Interpolators zwischen vorgegebenen Wegpunkten einer Bewegungsbahn liegende Orte ermittelt werden, entsprechend denen Soll-Werte für die jeweiligen Achspositionen bestimmt werden und wobei für jede lagegeregelte Achse in einem Lagereglertakt, dessen Frequenz großer als der Interpolationstakt ist, in einem jeweils zugeordneten Lageregelkreis die jeweilige Ist-Achspositon mit der jeweiligen Soll-Achspositon verglichen wird, wobei aus der Abweichung dieser Positionen zueinander über einen Regler die jeweilige Achse lagegeregelt wird und wobei Mittel zum Speichern von Korrekturwerten für die Bewegungsbahn vorgesehen sind, **dadurch gekennzeichnet**, daß die Korrekturwerte ($delta_x$) jeder Achse (x, y) jeweils als mindestens eine Fehlerkurve in einem Korrekturwertgeber (K1, K2) gespeichert sind, daß im Interpolationstakt für jede aktuelle Ist-Achsposition ($x_{ist}$) die aktuellen Korrekturwerte ($delta_x$) für die Achsen (x, y) den Fehlerkurven entnommen werden und daß der resultierende jeweilige Korrekturwert ($delta_x$) jeder Achse (x) jeweils additiv die im zugehörigen Lageregelkreis zu berücksichtigende jeweilige Ist-Achsposition ($x_{ist}$) korrigiert.

2. Numerische Steuerung nach Anspruch 1, **dadurch gekennzeichnet**, daß die jeweilige Fehlerkurve durch eine Folge von signifikanten Werten vorgeben ist, deren Zwischenwerte durch eine lineare Interpolation bestimmbar sind.

3. Numerische Steuerung nach Anspruch 1 oder 2, **dadurch gekennzeichnet**, daß Mittel (U1) zum Verzerren der Fehlerkurve entsprechend vorgegebenen Prozeßparametern vorgesehen sind.

4. Numerische Steuerung nach Anspruch 1, 2 oder 3, **dadurch gekennzeichnet**, daß jeweils ein Filter (U2) zum Begrenzen der Korrekturwertänderungsgeschwindigkeit.

## Claims

1. Numerical control for machine tools or robots, in which with the aid of an interpolator, clocked in an interpolation cycle, locations lying between given path points of a trajectory are established, in accordance with which locations desired values for the respective axial positions are determined, and wherein for each position-controlled axis in a position controller cycle, the frequency of which is greater than the interpolation cycle, in a respectively associated position control loop the respective actual axial position is compared with the respective desired axial position, in which case in consequence of the deviation of these positions in respect of each other the respective axis is controlled in terms of position by way of a controller and means are provided to store correction values for the trajectory, characterised in that the correction values ($delta_x$) of each axis (x, y) are stored, in each case, as at least one error curve in a correction value transmitter (K1, K2), in that in the interpolation cycle for each current actual axial position ($x_{ist}$) the current correction values ($delta_x$) for the axes (x, y) are taken from the error curves and in that the resultant respective correction value ($delta_x$) of each axis (x) in each case in an additive manner corrects the respective actual axial position ($x_{ist}$) to be taken into consideration in the associated position control loop.

2. Numerical control according to claim 1, characterised in that the respective error curve is given by a sequence of significant values, the intermediate values of which can be determined by a linear interpolation.

3. Numerical control according to claim 1 or 2, characterised in that means (U1) are provided for distorting the error curve in accordance with given process parameters.

4. Numerical control according to claim 1, 2 or 3, characterised by, in each case, a filter (U2) to limit the rate of correction value change.

## Revendications

1. Commande numérique pour machines-outils ou robots, dans laquelle il est déterminé, à l'aide d'un interpolateur cadencé par une cadence d'interpolation, des emplacements qui se trouvent entre des points prescrits de course d'une piste de déplacement, et selon lesquels des valeurs de consigne pour les positions des axes sont déterminées, la position réelle respective de l'axe étant comparée à la position respective de consigne de l'axe dans une boucle associée de régulation de position pour chaque axe régulé en position à une cadence de régulation de position, dont la fréquence est plus grande que celle de la cadence d'interpolation, l'axe respectif étant régulé en position par l'intermédiaire d'un régulateur à partir de l'écart de ces positions l'une par rapport à l'autre et des moyens étant prévus pour mémoriser les valeurs de correction pour la piste de mouvement, caractérisée en ce que les valeurs de correction ($delta_x$) de chaque axe (x, y) sont mémorisées comme au moins une courbe d'erreurs dans un générateur de valeur de correction (K1, K2), les valeurs actuelles (delta$_x$) de correction pour les axes (x, y) sont extraites des courbes d'erreurs pendant la cadence d'interpolation pour chaque position (x$_{ist}$) actuelle et réelle de l'axe et la valeur (delta$_x$) respective de correction résultant de chaque axe (x) corrigeant par addition la position (x$_{ist}$) de l'axe réelle et respective à considérer dans la boucle associée de régulation de position.

2. Commande numérique suivant la revendication 1, caractérisée en ce que la courbe respective d'erreur est prescrite par une suite de valeurs significatives, dont les valeurs intermédiaires sont susceptibles d'être déterminées par une interpolation linéaire.

3. Commande numérique suivant la revendication 1 ou 2, caractérisée en ce que des moyens (U1) sont prévus pour déformer les courbes d'erreurs suivant des paramètres opératoires prescrits.

4. Commande numérique suivant la revendication 1, 2 ou 3, caractérisée par un filtre (U2) destiné à limiter la vitesse de variation des valeurs de correction.